# EUROPEAN PATENT APPLICATION

(11) **EP 4 206 348 A1**
(43) Date of publication of application: **05.07.2023**
(21) Application number: 21860559.0
(22) Date of filing: 30.08.2021
(51) Int. Cl.: C22C 38/02, C22C 38/04, C22C 38/06, C22C 38/08, C22C 38/12, C21D 6/00, C21D 8/02, C21D 9/00, C21D 9/52, C22C 33/02, B21B 37/56

(54) **780 MPA-GRADE ULTRA-HIGH REAMING STEEL HAVING HIGH SURFACE QUALITY AND HIGH PERFORMANCE STABILITY, AND MANUFACTURING METHOD THEREFOR**

(30) Priority: 31.08.2020 CN 202010896424
(71) Applicant: BAOSHAN IRON & STEEL CO., LTD., Shanghai 201900 (CN)
(72) Inventor: WANG, Huanrong, Shanghai 201900 (CN); YANG, Feng, Shanghai 201900 (CN); ZHANG, Chen, Shanghai 201900 (CN); YANG, Ana, Shanghai 201900 (CN); BAI, Mingzhuo, Shanghai 201900 (CN); NI, Yaping, Shanghai 201900 (CN); WANG, Ming, Shanghai 201900 (CN)
(74) Representative: Kuhnen & Wacker Patent- und Rechtsanwaltsbüro PartG mbB
(86) International application number: PCT/CN2021/115415
(87) International publication number: WO 2022/042727

(57) **Abstract**

A 780 MPa-grade ultra-high reaming steel having high surface quality and high performance stability, and a manufacturing method therefor. The ultra-high reaming steel comprises the following components in percentage by weight: 0.03-0.08% of C, Si<0.2%, 0.5-2.0% of Mn, P≤0.02%, S≤ 0.003%, 0.01-0.08% of Al, N≤0.004%, 0.05-0.20% of Ti, 0.1-0.5% of Mo, Mg≤0.005%, O≤0.0030%, and the remainder being Fe and other inevitable impurities. The ultra-high reaming steel of the present invention achieves matching between good structure homogeneity and performance homogeneity and excellent strength, plasticity, and ultra-high reaming rate; the ultra-high reaming steel has yield strength greater than or equal to 750 MPa, tensile strength greater than or equal to 780 MPa, an elongation A50 greater than or equal to 15%, and a reaming rate greater than or equal to 70%; moreover, appearance of red iron scales on the surface of a steel plate can be avoided, thereby improving the surface quality of pickled high-strength steel; the ultra-high reaming steel can satisfy user requirements well, and can be applied to parts of passenger vehicle chassis components such as a control arm and an auxiliary frame, which require high strength and thinning.

## Description

### Technical Field

The present disclosure pertains to the field of high-strength steel, and in particular relates to a 780 MPa-grade steel having high surface quality, high performance stability and ultra-high hole expandability, and a manufacturing method for the same.

### Background Art

The automobile industry plays a very important role in the development of the national economy. Many parts in passenger vehicles, especially some parts of chassis and bodies, often need the use of pickled hot-rolled products. Weight reduction of passenger vehicles is not only a development trend in the automotive industry, but also a requirement of the laws and regulations. Fuel consumption per hundred kilometers is restricted by the laws and regulations. This is actually a disguised requirement to reduce the weight of the vehicle body, and in turn, the materials are required to have higher strength, smaller thickness and lower weight. Higher strength and lower weight will certainly be requirements of new model vehicles in the future. This will inevitably lead to use of steel of higher grades, and also change in chassis structure. For example, parts will be more complex. As such, improvements are necessary in the performances and surface quality of materials, as well as forming technologies, such as hydroforming, hot stamping, laser welding, etc. In turn, the strength, stamping performance, flanging performance, resilience, fatigue resistance and other performances of the materials need to be improved.

The high-strength and high-hole-expandability steel developed in China not only has relatively low strength compared with that developed in foreign countries, but also has poor performance stability. For example, the high-hole-expandability steel used by domestic auto parts companies is basically high-strength steel having a tensile strength of 600 MPa or less, and the competition in the market of high-hole-expandability steel of the 440 MPa grade or lower is red hot. Nowadays, the high-hole-expandability steel having a tensile strength of 780 MPa starts to be used gradually on a large scale in China. However, higher requirements are also imposed on two important indicators in the forming process, namely elongation and hole expansion ratio.

Along with the gradual decline in domestic passenger vehicle sales, the automobile industry has come to an inflection point, and the competition has become increasingly fierce. In order to further reduce process costs, passenger vehicle companies have higher and higher requirements for material performances. For example, in the production of a control arm on an automobile chassis (a structural part), in order to omit the stamping process, the hole expansion ratio is required to be further increased in addition to high strength and high plasticity. The hole expansion ratio of the 780 MPa-grade high-hole-expandability steel is required to be further increased from the current ≥50% to ≥70%. However, following the existing design concept for the 780 MPa-grade high-hole-expandability steel, not only the production process lacks the ability to guarantee the performances, but the hole expansion ratio is also basically 50-65%, which cannot meet the performance requirement of higher hole expansion ratio put forward by users. It should be pointed out that the hole expansion ratio is a parameter with large measurement dispersion. It is not only related with the structure uniformity and nature of the material, but also closely related with the measurement process, including the quality of punching and the judgment on cracking of the expanding hole.

There are a number of existing patents directed to 780 MPa-grade pickled steel having high hole expandability, as exemplified below:
Chinese Patent Publication CN103602895A relates to a low-carbon Nb-Ti micro-alloyed high-hole-expandability steel. Its compositional design is characterized by low carbon, high silicon, and Nb-Ti microalloying. Its guaranteed value of hole expansion ratio is ≥50%. The high silicon compositional design usually results in red iron scale on the steel plate surface. In addition, the coiling temperature required for forming bainite is about 500 °C. It is very difficult to control the temperature along the entire length of the steel coil, and it is easy to cause large fluctuations in the performances along the entire length.

Chinese Patent Publication CN105821301A relates to an 800 MPa-grade hot-rolled high-strength and high-hole-expandability steel. Its compositional design is also characterized by low carbon, high silicon and Nb-Ti microalloying. The Ti content thereof reaches a very high level, namely 0.15-0.18%. In the practical production process, this compositional design concept results in not only defects such as red iron scale on the strip steel surface, but also easy formation of coarse TiN due to the ultra-high Ti content, which is very unfavorable to the stability of the hole expansion ratio.

Chinese Patent Publication CN108570604A relates to a 780 MPa-grade hot-rolled pickled high-hole-expandability steel. Its compositional design is characterized by low carbon, high aluminum and high chromium. A three-stage cooling process is adopted in the process design. Although there is no red iron scale on the strip steel surface, the high-alumina design is likely to cause clogging of the casting nozzle in the practical production process. Moreover, the process is complicated. The three-stage cooling process is difficult to control, and the hole expansion ratio is not high.

The above-mentioned patent applications all have problems such as red iron scale, difficulty in steelmaking, and difficulty in controlling the temperature uniformity along the entire length of the strip steel.

In order to meet the requirements of users for higher surface quality, better performance stability, and better matching of strength, plasticity and hole expandability, it is necessary to make disruptive changes to the existing 780 MPa-grade high-hole-expandability steel.

It's well known that the elongation of a material is generally inversely proportional to the hole expansion ratio. That is, the higher the elongation, the lower the hole expansion ratio; conversely, the lower the elongation, the higher the hole expansion ratio. Hence, it is very difficult to obtain a high-hole-expandability steel having high elongation and high hole expandability on the one hand, and high strength on the other hand.

In addition, under the same or similar strengthening mechanism, the higher the strength of the material, the lower the hole expansion ratio. In order to obtain a steel having both good plasticity and good hole expandability/flanging ability, a better balance between them is required. On the other hand, in order to well match strength, plasticity and hole expandability, the addition of a relatively large amount of element silicon seems to be indispensable for a high-strength, high-plasticity and high-hole-expandability steel. However, the high silicon compositional design leads to poor steel surface quality. That is, the red iron scale defect formed in the hot rolling step is difficult to be removed completely in the subsequent pickling process, such that striped red iron scale appears on the surface of the pickled high-strength steel, which seriously affects the surface quality.

### Summary

One object of the present disclosure is to provide a 780 MPa-grade steel having high surface quality, high performance stability and ultra-high hole expandability, and a manufacturing method for the same. The ultra-high-hole-expandability steel obtained by the method of the present disclosure has good structure uniformity, performance uniformity and excellent matching of strength, plasticity, and ultra-high hole expansion ratio. It has a yield strength of ≥750MPa, a tensile strength of ≥780MPa, an elongation A₅₀ of ≥ 15%, and a hole expansion ratio of ≥ 70%. With the use of the method according to the present disclosure, red iron scale on the steel plate surface can be avoided, and the surface quality of the pickled high-strength steel can be improved. The ultra-high-hole-expandability steel according to the present disclosure can well meet the requirements of users, and can be used for some parts of a chassis of a passenger vehicle, such as a control arm and a sub-frame, which require higher strength and smaller thickness.

To achieve the above object, the technical solution of the present disclosure is as follows:
A 780 MPa-grade steel having high surface quality, high performance stability and ultra-high hole expandability, comprising the following components in weight percentages:
C: 0.03%-0.08%,
Si: <_0.2%,
Mn: 0.5%-2.0%,
P: <_0.02%,
S: <_0.003%,
Al: 0.01~0.08%,
N: <_0.004%,
Ti: 0.05%-0.20%,
Mo: 0.1%-0.5%,
Mg: <_0.005%,
O: <_0.0030%,
a balance of Fe and other unavoidable impurities.

Further, the ultra-high-hole-expandability steel according to the present disclosure may also comprise one or more of Nb, V, Cu, Ni, Cr, B and Ca. Preferably, if present, Nb≤0.06%, V≤0.05%, Cu≤0.5%, Ni≤0.5%, Cr≤0.5%, B≤0.001%, Ca≤0.005%; more preferably, Cu, Ni and Cr each preferably have a content of ≤0.3%; Nb and V each preferably have a content of ≤0.03%; B preferably has a content of ≤0.0005%; and Ca preferably has a content of ≤0.002%.

In some embodiments, the ultra-high-hole-expandability steel according to the present disclosure at least comprises any one or any two of Nb, V, Cu, Ni, Cr, B and Ca.

In some embodiments, the ultra-high-hole-expandability steel according to the present disclosure has a thickness of 1.5-6 mm, preferably 2-6 mm.

The ultra-high-hole-expandability steel according to the present disclosure has a yield strength of ≥750 MPa, preferably ≥760 MPa, a tensile strength of ≥780 MPa, preferably ≥810 MPa, an elongation A₅₀ of ≥15%, a hole expansion ratio of ≥70%, preferably ≥80%, more preferably ≥90%.

The ultra-high-hole-expandability steel according to the present disclosure has a microstructure of bainite + nano-scale carbides, and the nano-scale carbides are precipitated in bainitic ferrite.

In the compositional design of the ultra-high-hole-expandability steel according to the present disclosure:
Silicon: Silicon is an essential element in the steel, and it's also one of the important elements in the present disclosure. Caron enlarges an austenite phase region and stabilizes austenite. As an interstitial atom in the steel, carbon plays an important role for increasing steel strength, and has the greatest influence on the yield strength and tensile strength of the steel. In the present disclosure, the structure to be obtained in the hot rolling stage is low-carbon bainite. In order to obtain a high-strength steel having a final tensile strength at the level of 780 MPa, it is necessary to ensure that the carbon content is 0.03% or higher. If the carbon content is 0.03% or less, the tensile strength of bainite formed during low-temperature coiling is relatively low, and it is difficult to achieve a strength of 780 MPa or higher after bell type annealing. However, the carbon content should not be higher than 0.08%. If the carbon content is too high, it is easy to form low-carbon martensite during low-temperature coiling. Therefore, the carbon content should be controlled at 0.03-0.08%, preferably at 0.04-0.07%.

Silicon: Silicon is an essential element in the steel. As mentioned above, in order to meet customers' requirements for high strength, high plasticity and high hole expansion ratio, the composition is usually designed to include a relatively high amount of silicon, but the high silicon design of the composition leads to degraded surface quality of the steel plate which will have a good number of red iron scale defects. According to the present disclosure, in order to guarantee good surface quality, the silicon content should be controlled strictly in the compositional design. In other words, silicon is an impurity element in the present disclosure. Considering that silicon and manganese are used for deoxygenation in practical steelmaking, it seems difficult to completely avoid addition of silicon. As indicated by massive statistical data from practical production, when the silicon content is 0.2% or lower, red iron scale defects on the surface can be avoided during hot rolling; and usually, no appearance of red iron scale can be ensured when the silicon content is 0.15% or lower. In addition, when the silicon content is 0.2% or more, it is easy to form a martensite structure during online cooling and low-temperature coiling, making it difficult to obtain a bainite structure. Therefore, the silicon content in the steel should be controlled within 0.2%, preferably within 0.15%. In some embodiments, the content of Si is 0.05-0.2%. In some other embodiments, the content of Si is 0.05-0.15%.

Manganese: Manganese is the most essential element in the steel, and it's also one of the most important elements in the present disclosure. It's well known that Mn is an important element for enlarging the austenite phase region, and it can reduce the critical quenching rate of steel, stabilize austenite, refine grains, and delay transformation of austenite to pearlite. According to the present disclosure, in order to guarantee the strength of the steel plate and the grain refinement effect, the Mn content is generally controlled at 0.5% or higher. At the same time, the Mn content should generally not exceed 2.0%; otherwise, Mn segregation will occur easily during steelmaking, and hot tearing is also prone to occur during continuous casting of the slab. Therefore, the content of Mn in the steel is generally controlled at 0.5-2.0%, preferably 1.0-1.6%.

Phosphorus: Phosphorus is an impurity element in the steel. P has a strong propensity to segregate to grain boundaries. When the P content in the steel is relatively high (≥0.1%), Fe₂P will form and precipitate around the grains, leading to decreased plasticity and toughness of the steel. Therefore, its content should be as low as possible. Generally, it's desirable to control its content within 0.02%, so that the steelmaking cost will not be increased.

Sulfur: Sulfur is an impurity element in the steel. S in the steel often combines with Mn to form MnS inclusions. Particularly, when the contents of both S and Mn are relatively high, a large amount of MnS will form in the steel. MnS has certain plasticity itself, and it will deform in the rolling direction in a subsequent rolling process, so that not only the transverse plasticity of the steel plate will be degraded, but also the anisotropy of the structure will be increased, which is unfavorable to the hole expandability. Therefore, it's better to minimize the S content in the steel. In order to reduce the content of MnS, the S content must be controlled strictly. The S content is required to be controlled within 0.003%, preferably 0.0015% or lower.

Aluminum: The main role of aluminum in the steel is deoxygenation and nitrogen fixation. In the presence of strong carbide-forming elements such as Ti, the main function of Al is deoxygenation and grain refinement. According to the present disclosure, the content of Al as a common element for deoxygenation and grain refinement is generally controlled at 0.01-0.08%. If the Al content is lower than 0.01%, it cannot achieve the grain refinement effect; if the Al content is higher than 0.08%, the grain refinement effect comes to a plateau. Therefore, the content of Al in the steel is controlled at 0.01-0.08%, preferably at 0.02-0.05%.

Nitrogen: Nitrogen is an impurity element in the present disclosure, and its content should be as low as possible. However, nitrogen is an unavoidable element in the steelmaking process. Although its content is low, it can combine with strong carbide-forming elements such as Ti to form TiN particles which have a very adverse influence on the performances of the steel, especially unfavorable to the hole expandability. Due to the square shape of TiN, a large stress concentration exists between its sharp corner and the matrix. During the process of hole expansion deformation, the stress concentration between TiN and the matrix is prone to cause cracking which greatly reduces the hole expandability of the material. As a high-titanium design is adopted for the composition system according to the present disclosure, in order to minimize the adverse influence of TiN on hole expansion, the nitrogen content should thus be controlled within 0.004%, preferably 0.003% or lower.

Titanium: Titanium is one of the important elements in the present disclosure. Ti has primarily two functions in the present disclosure. One is to combine with the impurity element N in the steel to form TiN, so as to play a part in "nitrogen fixation"; and the other one is to form uniform and fine nano-scale carbides in bainitic ferrite in the subsequent high-temperature bell type annealing process, so as to improve strength, plasticity and hole expandability. When the titanium content is less than 0.05%, no obvious precipitation strengthening effect can be achieved; when the titanium content is higher than 0.20%, the coarse TiN will easily lead to poor impact toughness of the steel plate. Therefore, the titanium content in the steel should be controlled at 0.05-0.20%, preferably 0.07-0.10%.

Molybdenum: Molybdenum is one of the important elements in the present disclosure. The addition of molybdenum to the steel can greatly delay the phase transformation of ferrite and pearlite, which is beneficial to obtain a bainite structure. In addition, molybdenum is highly resistant to welding softening. Since the main purpose of the present disclosure is to obtain a low-carbon bainite structure, and low-carbon bainite tends to soften after welding, the addition of a certain amount of molybdenum can effectively reduce the degree of welding softening. Therefore, the molybdenum content should be controlled at 0.1-0.5%, preferably 0.20-0.40%.

Magnesium: Magnesium is one of the important elements in the present disclosure. The addition of magnesium to the steel allows for preferential formation of dispersed fine MgO particles at the steelmaking stage. These fine MgO particles can serve as nucleation particles for TiN. Hence, they can effectively increase the nucleation points for TiN and reduce the size of TiN in the subsequent continuous casting process. Since TiN has a great influence on the hole expansion ratio of the final steel plate, and it tends to cause the hole expansion ratio to be unstable, the content of Mg in the steel may thus be controlled within 0.005%.

Oxygen: Oxygen is an unavoidable element in steel making. For the present disclosure, the oxygen content in the steel is generally 30 ppm or lower after deoxygenation, and thus there will be no obvious adverse influence on the performances of the steel plate. Therefore, the content of O in the steel may be controlled within 30 ppm.

Copper: Copper is an optional element in the present disclosure. The addition of copper to the steel can improve the corrosion resistance of the steel. When it is added together with element P, the effect of corrosion resistance is better. When Cu is added in an amount of greater than 1%, an ε-Cu precipitate phase may form under certain conditions. This precipitate phase has a relatively strong precipitation strengthening effect. However, the addition of Cu tends to cause the phenomenon of "Cu embrittlement" in the rolling process. In order to make full use of the effect of copper in improving corrosion resistance without causing obvious phenomenon of "Cu embrittlement" in some application scenarios, the content of element Cu is generally controlled within 0.5%, preferably within 0.3%.

Nickel: Nickel is an optional element in the present disclosure. The addition of nickel to the steel imparts certain corrosion resistance, but the effect of corrosion resistance is weaker than that of copper. The addition of nickel to the steel has little influence on the tensile performance of the steel, but it can refine the structure and precipitate phase of the steel, thereby greatly improving the low temperature toughness of the steel. At the same time, the addition of a small amount of nickel to the steel with copper added can inhibit the occurrence of "Cu embrittlement". The addition of a relatively higher amount of nickel has no obvious adverse influence on the performances of the steel itself. Concurrent addition of copper and nickel can not only improve the corrosion resistance, but also refine the structure and precipitate phase of the steel, thereby greatly improving the low temperature toughness. However, because copper and nickel are relatively expensive alloying elements, in order to minimize the cost of alloy elements, the amount of nickel added is generally ≤0.5%, preferably ≤0.3%.

Chromium: Chromium is an optional element in the present disclosure. The addition of chromium to the steel mainly enables improvement of the strength of the steel by solid solution strengthening or microstructure refinement. Since the structure in the present disclosure is fine bainitic ferrite plus precipitated nano-scale carbides, and the mobile dislocations in the structure are reduced after the high-temperature bell type annealing process, the ratio of yield strength to tensile strength of the steel, i.e. the yield ratio, is relatively high, generally 0.90 or higher. The addition of a small amount of element chromium can properly reduce the yield strength of the steel, thereby reducing the yield ratio. In addition, the addition of a small amount of chromium can also play a role in improving the corrosion resistance. Generally, the amount of chromium added is ≤0.5%, and preferably ≤0.3%.

Niobium: Niobium is an optional element in the present disclosure. Like titanium, niobium is a strong carbide-forming element in the steel. The addition of niobium to the steel can greatly increase the sub-recrystallization temperature of the steel, help to obtain deformed austenite having a higher dislocation density in the finishing rolling stage, and refine the final phase transformation structure in the subsequent transformation process. However, the addition of too much niobium is undesirable. On the one hand, if the amount of niobium added exceeds 0.06%, it is easy to form relatively coarse niobium carbonitrides in the structure, which consumes some carbon atoms and thus reduces the precipitation strengthening effect of carbides. On the other hand, a high content of niobium further tends to cause anisotropy of the austenite structure in hot-rolled state. This anisotropy will be passed down to the final structure during the subsequent cooling phase transformation process, which is unfavorable for hole expandability. Therefore, the niobium content in the steel is generally controlled at ≤0.06%, preferably ≤0.03%.

Vanadium: Vanadium is an optional element in the present disclosure. Like titanium and niobium, vanadium is also a strong carbide-forming element. However, the solid solution or precipitation temperature of vanadium carbides is low, and they are usually all dissolved in austenite at the finishing rolling stage. Vanadium carbides begin to form in ferrite only when the temperature is decreased and phase transformation begins. Since the solid solubility of vanadium carbides in ferrite is greater than those of niobium and titanium carbides, vanadium carbides formed in ferrite have a larger size which is not conducive to precipitation strengthening. Hence, vanadium carbides contribute far less to the steel strength than titanium carbides. In addition, the formation of vanadium carbides also consumes a certain amount of carbon atoms. This is unfavorable for improving the steel strength. Therefore, the amount of vanadium added to the steel is generally ≤0.05%, preferably ≤0.03%.

Boron: Boron is an optional element in the present disclosure. Boron can greatly improve the hardenability of the steel, and helps to obtain a martensitic structure. Considering that the structure desired to obtain at the hot rolling stage is bainite instead of martensite according to the present disclosure, the content of element boron in the steel needs to be strictly controlled to prevent formation of martensite due to addition of element boron in an excessive amount. In addition, the addition of element boron to the steel may lead to formation of an irregular ferrite structure and even a martensite-austenite component. This is unfavorable to the low temperature impact toughness of the steel. Therefore, the amount of boron added to the steel is generally controlled at ≤0.001%, preferably ≤0.0005%.

Calcium: Calcium is an optional element in the present disclosure. Calcium can improve the shape of sulfides such as MnS. For example, the long strip-shaped MnS and other sulfides are converted to spherical CaS. This helps to improve the shape of inclusions, thereby reducing the adverse influence of long strip-shaped sulfides on hole expandability. However, the addition of calcium in an excessive amount will increase the amount of calcium oxide which is unfavorable for hole expandability. Therefore, the amount of calcium added to the steel is generally ≤0.005%, preferably ≤0.002%.

The ultra-high-hole-expandability steel according to the present disclosure adopts the design concept based on a silicon-free or low-silicon composition. In addition, nano-scale carbides are precipitated in bainitic ferrite, and they are uniformly and dispersedly distributed. Uniform and fine bainite, and the uniformly distributed nano-scale carbides formed in bainitic ferrite endow the steel plate with good structure uniformity, performance uniformity, and excellent matching of strength, plasticity, and ultra-high hole expansion ratio.

The method for manufacturing the 780 MPa-grade steel having high surface quality, high performance stability and ultra-high hole expandability according to the present disclosure comprises the following steps:
1) Smelting, casting
   wherein the above components are subjected to smelting in a converter or electrical furnace, secondary refining in a vacuum furnace, and casting to form a cast blank or ingot;
2) Reheating of the cast blank or ingot, wherein a heating rate is ≥20 °C/h; a heating temperature is ≥1230 °C; and a holding time is 1-2 hours;
3) Hot rolling
   wherein an initial rolling temperature is 1050-1150°C; wherein 3-5 passes of heavy reduction rolling is performed at a temperature of 1050°C or higher with an accumulated deformation rate of ≥50% to obtain an intermediate blank; wherein the intermediate blank is held till 950-1000°C, and then subjected to final 3-7 passes of rolling with an accumulated deformation rate of ≥70% to obtain a steel plate, wherein a final rolling temperature is 850-950°C; wherein the steel plate is cooled to 300°C or lower for coiling;
4) Annealing
   wherein bell type annealing is performed, wherein a heating rate is ≥20°C/h; a bell type annealing temperature is 500-650°C; and a bell type annealing time is 12-48h; wherein the steel plate is cooled to 300°C or lower at a cooling rate of ≤50°C/h, taken out and coiled;
5) Pickling
   wherein a moving speed of the strip steel is adjusted within a range of 30-140 m/min during pickling; a pickling temperature is controlled at 75-85°C, and a tension leveling rate is controlled at ≤3%; wherein the strip steel is then subjected to rinsing, surface drying, and oiling.

Preferably, after the pickling, the rinsing is carried out at a temperature in a range of 35-50°C to ensure surface quality of the strip steel, and the surface of the strip steel is dried at 120-140°C, followed by oiling.

In the manufacturing method according to the disclosure:
The main purpose of the heating temperature of ≥ 1230°C for the cast blank (ingot), the holding time of 1-2 hours, the initial rolling temperature of 1050-1150°C, and the 3-5 passes of heavy reduction at a temperature of 1050°C or higher with an accumulated deformation of ≥ 50% is to refine the austenite grains while retaining more solid dissolved titanium. Then, the intermediate blank is held till 950-1000°C, and then subjected to final 3-7 passes of rolling with an accumulated deformation rate of ≥70%. After the final rolling is completed at a temperature of 850-950°C, the steel plate is water cooled to 300°C or lower at a cooling rate of ≤50°C/s, and then coiled and cooled to room temperature.

In some embodiments, the heating rate in step 2) is 20-40°C/h, and the heating temperature is 1230-1300°C.

At the stage of rough rolling and finishing rolling, the rolling should be completed as quickly as possible to ensure that there is more titanium that is solid dissolved in austenite. After the high-temperature final rolling is completed, the strip steel is cooled online at a cooling rate of 10-100°C/s, preferably 30-100°C/s, to 300°C or lower to obtain a low-carbon bainite structure.

The steel coil obtained by the hot rolling process is annealed at a high temperature of 500-650°C for a long period of time to promote precipitation of nano-scale carbides in bainitic ferrite, and make the structure and precipitation more uniform at the same time. At the hot rolling stage, the low-temperature coiling leads to formation of low-carbon bainite having a uniform and fine structure.

At the bell type annealing stage, fine and dispersed nano-scale carbides are precipitated in bainitic ferrite, which improves the strength, plasticity and hole expansion ratio. There is an inverse relationship between the bell type annealing temperature and time. That is, the lower the bell type annealing temperature, the longer the bell type annealing time; conversely, the higher the bell type annealing temperature, the shorter the bell type annealing time. If the bell type annealing temperature is lower than 500°C, it is insufficient to induce precipitation of the carbides; if the bell type annealing temperature is higher than 650°C, the carbides tend to coarsen, and the strength decreases. Therefore, the bell type annealing temperature is selected from the range of 500-650°C.

In some embodiments, in step 4), the heating rate is 20-40°C/h, and the cooling rate is 15-50°C/h.

In the steelmaking process, deoxygenation is effectuated with Mg to preferentially form dispersed and fine MgO in the molten steel, thereby creating more nucleation particles for the formation of TiN in the subsequent continuous casting process. This can effectively refine the TiN particles and improve the stability of hole expansion ratio.

The addition of a relatively large amount of Ti and a small amount of Mo allows for further precipitation of nano-scale carbides (Ti, Mo)C from bainite under the long-term bell type annealing process conditions, so that the tensile strength can reach 780MPa or higher. The addition of element Mo can ensure that the precipitated nano-scale carbides will not be significantly coarsened at higher bell type annealing temperature, and will not affect the final strength of the strip steel.

After the above low-temperature coiling and high-temperature bell type annealing processes, the steel strip exhibits excellent strength, plasticity and hole expandability, especially excellent performance stability.

In the bell type annealing process, low-carbon bainite having a uniform and fine structure obtained by low-temperature coiling at the hot rolling stage promotes precipitation of the nano-scale carbides in bainitic ferrite by the high-temperature bell type annealing process, and can further improve the uniformity of the structure at the same time.

After the pickling process, the strip steel also has excellent surface quality. The above composition, process, structure and performances are completely outside of the design concept of the prior art 780 MPa high-hole-expandability steel. Moreover, the high-hole-expandability steel according to the present disclosure has stable performances, and the process according to the present disclosure is simple, suitable for mass production.

The beneficial effects of the present disclosure include:
1. In the design concept of the ultra-high-hole-expandability steel according to the present disclosure, a design based on a silicon-free or low-silicon composition is adopted. Silicon is an impurity element in the present disclosure. The silicon-free or low-silicon design can ensure that molten fayalite (Fe₂SiO₄) will not form on the surface of the slab during heating. The advantages of the silicon-free or low-silicon design are as follows: first, it helps to obtain excellent surface quality of the strip steel; second, it helps to precisely control the key process parameters in the hot rolling process to obtain a hot-rolled strip steel having stable performances along its entire length; third, it helps to obtain a uniform bainite structure in the subsequent low-temperature coiling process.
2. In the process design, a process of low-temperature coiling + bell furnace annealing is adopted. This is significantly different from the traditional high-temperature coiling process utilized for high-hole-expandability steel. The combination of the silicon-free or low-silicon compositional design and the low-temperature coiling process enables obtainment of a hot-rolled strip steel having uniform and stable performances along its entire length, and the structure is exclusively bainite. Since the nano-scale precipitate phase has no time to precipitate fully during the low-temperature coiling, the strength of the bainite structure at this point is usually lower than 780 MPa. The subsequent bell type annealing process allows for further formation of fine and uniform nano-scale carbides in bainitic ferrite, so as to further increase the strength to 780 MPa or higher. The temperature of the steel coil is relatively uniform under the bell type annealing process conditions, and thus the precipitation of the nano-scale precipitate phase in bainitic ferrite is more uniform than that of the nano-scale precipitate phase during the direct phase transformation in the high-temperature coiling process, thereby guaranteeing uniform and stable performances of the strip steel along its entire length. Uniform and fine bainite, and the uniformly distributed nano-scale carbides formed in bainitic ferrite endow the steel plate with good structure uniformity, performance uniformity, and excellent matching of strength, plasticity, and ultra-high hole expansion ratio.
3. The steel coil or steel plate made of the steel having high surface quality, high performance stability and ultra-high hole expandability according to the present disclosure has a yield strength of ≥750 MPa, a tensile strength of ≥800 MPa, a thickness of 1.5-6 mm, preferably 2-6 mm, and has good elongation (transverse A50≥15%), cold bending performance (d≤2.5a, 180°) and hole expandability (hole expansion ratio≥70%). It exhibits excellent matching of strength, plasticity, toughness, cold bending and hole expandability. It may be used to manufacture complex parts such as automobile chassis, sub-frames and the like that require high strength, reduced thickness, hole expansion and flanging, and has a very broad application prospect.

### Description of the Drawings

Fig. 1 is a process flow chart of the method for manufacturing a 780 MPa-grade steel having high surface quality, high performance stability and ultra-high hole expandability according to the present disclosure.
Fig. 2 is a schematic view showing the rolling and cooling processes in the method for manufacturing a 780 MPa-grade steel having high surface quality, high performance stability and ultra-high hole expandability according to the present disclosure.
Fig. 3 is a schematic view showing the bell type annealing process in the method for manufacturing a 780 MPa-grade steel having high surface quality, high performance stability and ultra-high hole expandability according to the present disclosure.
Fig. 4 is a typical metallographical photo of the ultra-high-hole-expandability steel of Example 1 according to the disclosure.
Fig. 5 is a typical metallographical photo of the ultra-high-hole-expandability steel of Example 3 according to the disclosure.
Fig. 6 is a typical metallographical photo of the ultra-high-hole-expandability steel of Example 7 according to the disclosure.

### Detailed Description

The disclosure will be further illustrated with reference to the following Examples and accompanying drawings.

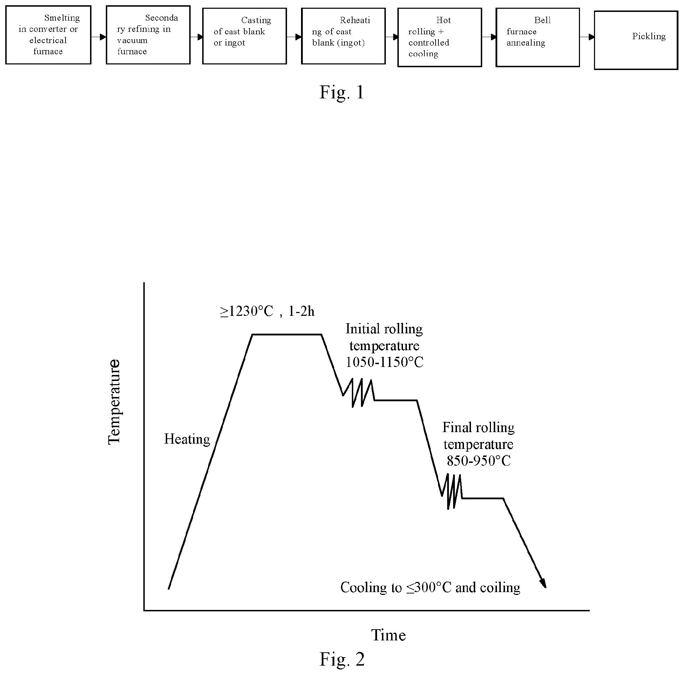

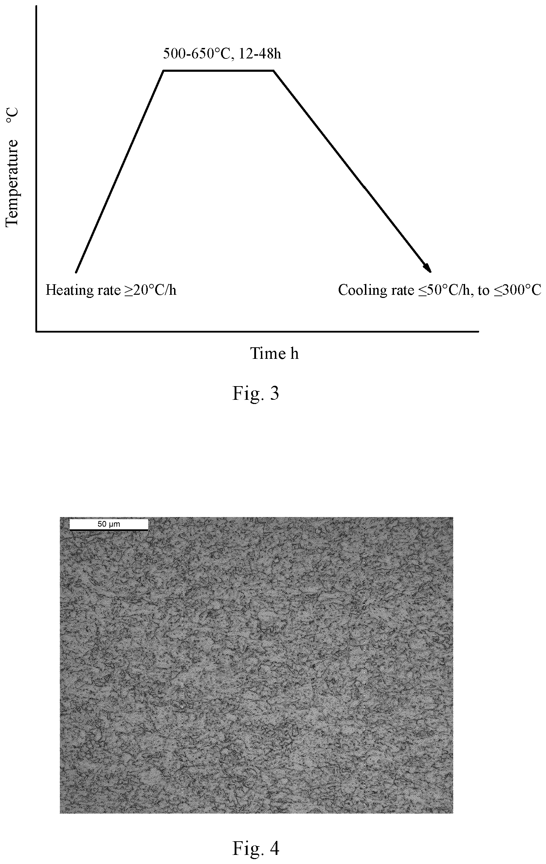

Referring to Fig. 1-Fig. 3, the method for manufacturing the 780 MPa-grade steel having high surface quality, high performance stability and ultra-high hole expandability according to the present disclosure comprises the following steps:
1) Smelting, casting
   wherein the above composition is subjected to smelting in a converter or electrical furnace, secondary refining in a vacuum furnace, and casting to form a cast blank or ingot;
2) Reheating of the cast blank or ingot, wherein a heating rate is ≥20 °C/h; a heating temperature is ≥1230 °C; and a holding time is 1-2 hours, as shown by Fig. 2;
3) Hot rolling
   wherein an initial rolling temperature is 1050-1150°C; wherein 3-5 passes of heavy reduction rolling is performed at a temperature of 1050°C or higher with an accumulated deformation rate of ≥50% to obtain an intermediate blank; wherein the intermediate blank is held till 950-1000°C, and then subjected to final 3-7 passes of rolling with an accumulated deformation rate of ≥70% to obtain a steel plate, wherein a final rolling temperature is 850-950°C, as shown by Fig. 3;
4) Annealing
   wherein bell type annealing is performed, wherein a heating rate is ≥20°C/h; a bell type annealing temperature is 500-650°C; and a bell type annealing time is 12-48 h; wherein the steel plate is cooled to 300°C or lower at a cooling rate of ≤50°C/h, taken out and coiled, as shown by Fig. 4;
5) Pickling
   wherein a moving speed of the strip steel is adjusted within a range of 30-140 m/min during pickling; a pickling temperature is controlled at 75-85°C, and a tension leveling rate is controlled at ≤3%; wherein the strip steel is then subjected to rinsing at a temperature in a range of 35-50°C, surface drying at a temperature in a range of 120-140°C, and oiling.

The compositions of the Examples of the ultra-high-hole-expandability steel according to the present disclosure are shown in Table 1. The production process parameters for the Examples of the steel according to the present disclosure are listed in Table 2 and Table 3, wherein the thickness of the steel blank in the rolling process is 120 mm. The mechanical performances of the Examples of the steel plates according to the present disclosure are listed in Table 4. The tensile performances (yield strength, tensile strength, elongation) were tested in accordance with International Standard ISO6892-2-2018; and the hole expansion ratio was tested in accordance with International Standard ISO16630-2017.

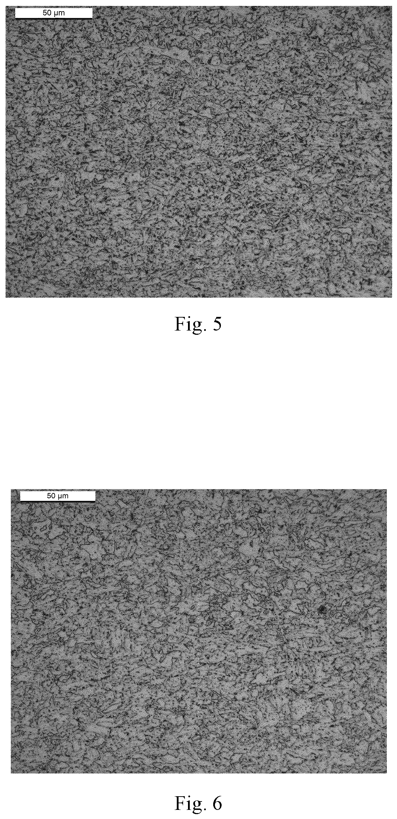

As it can be seen from Table 4, the yield strength of the steel coil is ≥750 MPa, while the tensile strength is ≥800 MPa, the elongation A₅₀ is usually in the range of 16-18%, and the hole expansion ratio satisfies ≥70%. As it can be seen from the above Examples, the 780 MPa high-strength steel according to the present disclosure exhibits good matching of strength, plasticity, toughness and hole expandability. It is especially suitable for parts that require high strength, reduced thickness, hole expansion and flanging forming, such as a control arm in an automobile chassis structure. It can also be used for complex parts such as wheels that need hole flanging. Therefore, it has broad application prospects. Fig. 4, Fig. 5 and Fig. 6 show the typical metallographic photographs of Examples 1, 3 and 7 according to the present disclosure respectively when they were directly cooled on-line to low temperature for coiling. As it can be seen from these figures, for a system having a composition designed according to the present disclosure, the structure obtained during low-temperature coiling is uniform and fine low-carbon bainite. The precipitation of dispersed, fine and uniform nano-scale carbides in the bainitic ferrite lath in the subsequent bell type annealing process promotes the strength and plasticity, improves the structure uniformity, and also improves the hole expandability.

**Table 1 (unit: weight%)**

| Ex. | C | Si | Mn | P | S | Al | N | Mo | Ti | O | Mg | Cu | Ni | Cr | Nb | V | B | Ca |
|---|---|---|---|---|---|---|---|---|---|---|---|---|---|---|---|---|---|---|
| 1 | 0.06 | 0.09 | 1.25 | 0.014 | 0.0023 | 0.045 | 0.0034 | 0.2 | 0.1 | 0.001 | 0.0015 | / | / | / | / | / | / | 0.0015 |
| 2 | 0.032 | 0.18 | 1.98 | 0.01 | 0.0018 | 0.05 | 0.004 | 0.48 | 0.2 | 0.002 | / | 0.2 | 0.2 | / | / | / | / | / |
| 3 | 0.043 | 0.2 | 1.02 | 0.016 | 0.002 | 0.034 | 0.0028 | 0.38 | 0.18 | 0.0005 | 0.0048 | / | 0.1 | / | / | / | 0.0008 | 0.001 |
| 4 | 0.071 | 0.06 | 0.85 | 0.011 | 0.0015 | 0.079 | 0.0029 | 0.25 | 0.08 | 0.0021 | 0.0025 | / | / | 0.5 | / | 0.05 | / | / |
| 5 | 0.031 | 0.12 | 1.86 | 0.02 | 0.0012 | 0.023 | 0.0023 | 0.1 | 0.19 | 0.0028 | 0.003 | 0.5 | / | / | 0.06 | / | / | / |
| 6 | 0.08 | 0.18 | 0.52 | 0.009 | 0.0009 | 0.062 | 0.0033 | 0.18 | 0.05 | 0.0017 | 0.0045 | / | / | / | 0.02 | 0.03 | / | 0.005 |
| 7 | 0.058 | 0.15 | 1.43 | 0.012 | 0.0005 | 0.011 | 0.0027 | 0.15 | 0.15 | 0.0024 | / | / | 0.5 | 0.1 | / | / | 0.0004 | / |
| 8 | 0.055 | 0.05 | 1.62 | 0.013 | 0.0028 | 0.038 | 0.0035 | 0.31 | 0.12 | 0.0029 | 0.004 | 0.1 | / | / | 0.04 | / | / | / |
| 9 | 0.047 | 0.08 | 1.25 | 0.016 | 0.001 | 0.049 | 0.0025 | 0.4 | 0.14 | 0.0026 | 0.0022 | / | 0.3 | 0.3 | / | / | / | 0.002 |
| 10 | 0.066 | 0.1 | 1.77 | 0.015 | 0.0021 | 0.072 | 0.003 | 0.27 | 0.09 | 0.0023 | / | 0.3 | / | / | / | 0.01 | 0.0005 | / |

**Table 2**

| | Heating rate °C/h | Heating temper ature °C | Holdin g time h | Initial rolling temper ature °C | Accumulat ed deformatio n rate during rough rolling % | Intermed iate blank temperat ure °C | Accumulat ed deformatio n rate during finishing rolling % | Final rolling temper ature °C | Water cooling rate °C/s | Steel plate thickne ss mm | Coiling temper ature °C |
|---|---|---|---|---|---|---|---|---|---|---|---|
| Ex. 1 | 38 | 1270 | 1.5 | 1100 | 80 | 970 | 75 | 890 | 90 | 2 | 150 |
| Ex. 2 | 25 | 1240 | 1.8 | 1060 | 50 | 965 | 90 | 860 | 50 | 6 | 300 |
| Ex. 3 | 20 | 1290 | 1.1 | 1140 | 80 | 990 | 75 | 930 | 80 | 2 | 100 |
| Ex. 4 | 28 | 1260 | 1.6 | 1080 | 55 | 960 | 91 | 880 | 30 | 5 | 250 |
| Ex. 5 | 22 | 1230 | 2.0 | 1050 | 75 | 955 | 90 | 850 | 60 | 3 | r.t. |
| Ex. 6 | 30 | 1300 | 1.0 | 1150 | 60 | 1000 | 92 | 950 | 40 | 4 | 200 |
| Ex. 7 | 40 | 1280 | 1.2 | 1120 | 80 | 980 | 75 | 910 | 100 | 2 | 50 |
| Ex. 8 | 36 | 1250 | 1.7 | 1070 | 70 | 950 | 92 | 870 | 70 | 3 | r.t. |
| Ex. 9 | 32 | 1235 | 1.9 | 1065 | 67 | 975 | 93 | 920 | 35 | 2.6 | 180 |
| Ex. 10 | 35 | 1275 | 1.4 | 1085 | 71 | 995 | 95 | 885 | 55 | 1.8 | 230 |

**Table 3**

| | Heating rate °C/h | Bell type annealin g temperat ure °C | Bell type annealin g time h | Cooling temperat ure °C/h | Tempera ture of strip steel leaving annealin g furnace °C | Moving speed of strip steel during pickling m/min | Pickling temperat ure °C | Tension leveling rate % | Rinsing temperat ure °C | Drying temperat ure °C |
|---|---|---|---|---|---|---|---|---|---|---|
| Ex. 1 | 30 | 520 | 44 | 30 | 260 | 60 | 82 | 2.5 | 40 | 135 |
| Ex. 2 | 23 | 610 | 24 | 40 | 200 | 45 | 76 | 1.0 | 35 | 120 |
| Ex. 3 | 35 | 500 | 48 | 20 | 300 | 30 | 75 | 1.5 | 47 | 128 |
| Ex. 4 | 20 | 590 | 30 | 45 | r.t. | 140 | 80 | 0.8 | 42 | 140 |
| Ex. 5 | 32 | 650 | 12 | 20 | 250 | 40 | 77 | 1.2 | 50 | 133 |
| Ex. 6 | 27 | 540 | 40 | 50 | 100 | 100 | 79 | 2.3 | 37 | 125 |
| Ex. 7 | 25 | 570 | 36 | 25 | 150 | 70 | 81 | 0.6 | 41 | 134 |
| Ex. 8 | 40 | 630 | 16 | 15 | 210 | 120 | 83 | 1.1 | 38 | 130 |
| Ex. 9 | 37 | 580 | 32 | 35 | 170 | 80 | 78 | 3.0 | 44 | 122 |
| Ex. 10 | 33 | 615 | 20 | 30 | 280 | 50 | 85 | 0.9 | 46 | 138 |

**Table 4: Mechanical performances of steel plates**

| | Yield strength MPa | Tensile strength MPa | Elongation % | Hole expansion ratio % |
|---|---|---|---|---|
| Ex. 1 | 765 | 821 | 17 | 95 |
| Ex. 2 | 771 | 820 | 16 | 89 |
| Ex. 3 | 774 | 826 | 17 | 77 |
| Ex. 4 | 780 | 815 | 18 | 101 |
| Ex. 5 | 772 | 817 | 16 | 97 |
| Ex. 6 | 775 | 819 | 17 | 92 |
| Ex. 7 | 764 | 829 | 16 | 110 |
| Ex. 8 | 770 | 823 | 17 | 86 |
| Ex. 9 | 751 | 818 | 18 | 94 |
| Ex. 10 | 756 | 821 | 19 | 99 |

## Claims

1. A 780 MPa-grade steel having high surface quality, high performance stability and ultra-high hole expandability, comprising the following components in weight percentages:
C: 0.03-0.08%,
Si: ≤0.2%,
Mn: 0.5-2.0%,
P: <_0.02%,
S: <_0.003%,
Al: 0.01-0.08%,
N: <_0.004%,
Ti: 0.05-0.20%,
Mo: 0.1-0.5%,
Mg: <_0.005%,
O: <_0.0030%,
a balance of Fe and other unavoidable impurities.

2. The 780 MPa-grade steel having high surface quality, high performance stability and ultra-high hole expandability according to claim 1, further comprising any one or any two or more of wherein Cu, Ni and Cr each preferably have a content of ≤0.3%; Nb and V each preferably have a content of ≤0.03%; B preferably has a content of ≤0.0005%; and Ca preferably has a content of ≤0.002%.

3. The 780 MPa-grade steel having high surface quality, high performance stability and ultra-high hole expandability according to claim 1, wherein C: 0.04-0.07%.

4. The 780 MPa-grade steel having high surface quality, high performance stability and ultra-high hole expandability according to claim 1, wherein Si ≤0.15%, S ≤0.0015%, and/or N ≤0.003%.

5. The 780 MPa-grade steel having high surface quality, high performance stability and ultra-high hole expandability according to claim 1, wherein Mn: 1.0-1.6%.

6. The 780 MPa-grade steel having high surface quality, high performance stability and ultra-high hole expandability according to claim 1, wherein Al: 0.02-0.05%.

7. The 780 MPa-grade steel having high surface quality, high performance stability and ultra-high hole expandability according to claim 1, wherein Ti: 0.07-0.10%.

8. The 780 MPa-grade steel having high surface quality, high performance stability and ultra-high hole expandability according to claim 1, wherein Mo: 0.20-0.40%.

9. The 780 MPa-grade steel having high surface quality, high performance stability and ultra-high hole expandability according to claim 1, wherein the ultra-high-hole-expandability steel has a microstructure of bainite + nano-scale carbide, wherein the nano-scale carbides are precipitated in bainitic ferrite.

10. The 780 MPa-grade steel having high surface quality, high performance stability and ultra-high hole expandability according to any one of claims 1-9, wherein the ultra-high-hole-expandability steel has a yield strength of ≥750 MPa, a tensile strength of ≥780 MPa, an elongation A₅₀ of ≥15%, and a hole expansion ratio of ≥70%.

11. The 780 MPa-grade steel having high surface quality, high performance stability and ultra-high hole expandability according to claim 10, wherein the ultra-high-hole-expandability steel has a yield strength of ≥760 MPa, a tensile strength of ≥810 MPa, an elongation A₅₀ of ≥15%, and a hole expansion ratio of ≥80%.

12. A method for manufacturing the 780 MPa-grade steel having high surface quality, high performance stability and ultra-high hole expandability according to any one of claims 1-11, comprising the following steps:
1) Smelting, casting
wherein the components according to any one of claims 1-8 are subjected to smelting in a converter or electrical furnace, secondary refining in a vacuum furnace, and casting to form a cast blank or ingot;
2) Reheating of the cast blank or ingot, wherein a heating rate is ≥20 °C/h; a heating temperature is ≥1230 °C; and a holding time is 1-2 hours;
3) Hot rolling
wherein an initial rolling temperature is 1050-1150°C; wherein 3-5 passes of heavy reduction rolling is performed at a temperature of 1050°C or higher with an accumulated deformation rate of ≥50% to obtain an intermediate blank; wherein the intermediate blank is held till 950-1000°C, and then subjected to final 3-7 passes of rolling with an accumulated deformation rate of ≥70% to obtain a steel plate, wherein a final rolling temperature is 850-950°C; wherein the steel plate is cooled to 300°C or lower for coiling;
4) Annealing
wherein bell type annealing is performed, wherein a heating rate is ≥20°C/h; a bell type annealing temperature is 500-650°C; and a bell type annealing time is 12-48 h; wherein the steel plate is cooled to 300°C or lower at a cooling rate of ≤50°C/h, taken out and coiled;
5) Pickling
wherein a moving speed of the strip steel is adjusted within a range of 30-140 m/min during pickling; a pickling temperature is controlled at 75-85°C, and a tension leveling rate is controlled at ≤3%; wherein the strip steel is then subjected to rinsing, surface drying, and oiling.

13. The method for manufacturing the 780 MPa-grade steel having high surface quality, high performance stability and ultra-high hole expandability according to claim 12, wherein in step 5), after the pickling, the rinsing is carried out at a temperature in a range of 35-50°C, and the surface of the strip steel is dried at 120-140°C, followed by oiling.

14. The method for manufacturing the 780 MPa-grade steel having high surface quality, high performance stability and ultra-high hole expandability according to claim 12, wherein the heating rate in step 2) is 20-40°C/h, and the heating temperature is 1230-1300°C.

15. The method for manufacturing the 780 MPa-grade steel having high surface quality, high performance stability and ultra-high hole expandability according to claim 12, wherein in step 4), the heating rate is 20-40°C/h, and the cooling rate is 15-50°C/h.
